# EUROPÄISCHE PATENTSCHRIFT

(11) **EP 3 268 299 B1**
(45) Veröffentlichungstag und Bekanntmachung des Hinweises auf die Patenterteilung: **12.08.2020**
(21) Anmeldenummer: 16709049.7
(22) Anmeldetag: 09.03.2016
(51) Int. Cl.: B65G 69/18, B65D 90/62, F16K 27/02

(54) **ANDOCKVORRICHTUNG UND ANDOCKVERFAHREN**
DOCKING DEVICE AND DOCKING METHOD
DISPOSITIF D'ACCOUPLEMENT ET PROCÉDÉ D'ACCOUPLEMENT

(30) Priorität: 09.03.2015 DE 102015103433
(43) Veröffentlichungstag der Anmeldung: 17.01.2018
(73) Patentinhaber: Andocksysteme G. Untch GmbH, 79410 Badenweiler (DE)
(72) Erfinder: UNTCH, Günter, 79410 Badenweiler (DE)
(74) Vertreter: Westphal, Mussgnug & Partner Patentanwälte mbB
(86) Internationale Anmeldenummer: PCT/EP2016/055051
(87) Internationale Veröffentlichungsnummer: WO 2016/142432

(56) Entgegenhaltungen:
- EP-A1- 0 447 023
- EP-A1- 1 213 244
- WO-A2-2008/071181
- CH-A5- 695 425
- DE-A1-102007 050 077
- DE-A1-102011 009 303
- US-A- 4 271 865
- US-A1- 2008 127 929

## Beschreibung

Die Erfindung betrifft eine Andockvorrichtung, für ein kontaminationsfreies Verbinden beispielsweise zweier Gebinde oder zweier Leitungen, mit zum Umschalten zwischen einer Andockstellung und einer Durchflussstellung um eine gemeinsame Achse drehbaren Absperrorganen einer Mehrfachklappe, die einen Durchfluss, beispielsweise eines Schüttgutes, in der Andockstellung zu blockieren und in der Durchflussstellung durchzulassen bestimmt ist, welche Absperrorgane, insbesondere Teller, jeweils in einem Gehäuse gelagert und derart in dem jeweiligen Gehäuse angeordnet sind, dass die Absperrorgane in der Andockstellung mit Schnittstellenflächen zumindest teilflächig aneinander anliegen und gegeneinander abgedichtet sind.

Die Erfindung betrifft weiterhin ein Andockverfahren zum kontaminationsfreien Verbinden zweier Gebinde oder Rohrleitungen mit einem Segmentventil.

Eine solche Doppelklappenvorrichtung nach beispielsweise DE 10 2011 009 303 ist in **Figur 1** dargestellt. Eine dreiteilige Klappe 10S, 20S, 30S ist um eine zentrale Querachse, nämlich eine klappeninterne Achse AS, drehbar in einem Gehäuse 24S angeordnet, durch das ein Schüttgut in einer Durchflussrichtung DS leitbar ist. Dabei steht die bekannte Mehrfachklappe selbst in ihrer Durchflussstellung körperlich im Produktstrom, sodass Schüttgut durch sie behindert wird, auch wenn beidseits der Durchfluss gelingt. Die Teller dieser Dreifachlappe sind mittels gewichtiger Gehäuse und steifer Lagerungen auf den Drehachsenbereich beschränkt mit Kräften beaufschlagbar, um möglichst dicht und vollumfänglich aneinander anzuliegen. Dennoch gibt es das Problem des sogenannten Schnäbelns. Die dem Produktstrom fern der klappeninternen Achse AS ausgesetzten Schnittstellen drohen dabei leicht geöffnet doch kontaminierendes Material in den Bereich zwischen die Teller der Mehrfachklappe einzulassen.

Weitere Andockvorrichtungen sind in der WO 2008/071181 A1, der EP 1 213 244 A1, der US 2008/127929 A1, der CH 695 425 A5, der DE 10 2007 050 077 A1, der US 4 271 865 A und der EP 0 447 023 A1 offenbart. DE 10 2007 050 077 A1 offenbart eine Andockvorrichtung gemäß dem Oberbegriff des Anspruchs 1.

In einem anderen technischen Gebiet der Behälterverschlusstechnik ist beispielsweise in WO 2014/076208 A1 ein abgedichteter Behälter mit einem ersten Flansch gezeigt, der abgedichtet mit einer ersten Tür verschlossen werden kann. Die Tür ist mit einem Gelenk an dem Flansch befestigt. Hierbei handelt es sich also nicht um eine Mehrfachklappeneinrichtung mit klappeninterner Drehachse sondern um eine Verschlusseinrichtung, quasi einen Deckel. Dieser Deckel ist angeblich mit seiner Anschlussumgebung zum abgedichteten Überführen zwischen einem solchen Behälter und einem geschlossenen Raum geeignet, wobei der geschlossene Raum einen weiteren Flansch aufweist, der mittels Bajonettverschlusssystem an den ersten Flansch angeschlossen werden kann. Die Behälterverschlusstechnik kennt das Problem des Schnäbelns nicht.

Der bekannte abgedichtete Behälter kann weiterhin mit einer zweiten Tür verschlossen werden, die normalerweise eine Öffnung verschließt, welche durch den zweiten Flansch bestimmt ist. Die Türen sind mittels Bajonettverschlusssystem einander gegenüber gesichert. Schließlich ist ein Aktuator der Einrichtung zum abgedichteten Überführen beschrieben, der ein Zahnstangensystem aufweist. Dessen Ritzel ist an ein mobiles Element des Gelenks angeschlossen, sodass ein Teil des Zahnstangensystems die erste Tür öffnen oder schließen kann. In diesem System begegnet die Tür dem Produktstrom nirgends in vergleichbarer Art wie in dem vorangehend beschriebenen Beispiel einer Mehrfachklappenanordnung.

Das Schnäbeln der Absperrorgane von Mehrfachklappen mit gemeinsamer Rotationsachse war zu lösen. Materialkombinationen von Kunststoff und Metall sollten möglichst uneingeschränkt verwendbar sein. Es war dabei eine einfache und sichere Handhabbarkeit angestrebt. Die Andockvorrichtung sollte bevorzugt automatisiert oder manuell möglichst einfach und fehlerfrei handhabbar sein.

Dieses Problem wird durch eine Andockvorrichtung mit den Merkmalen des Anspruchs 1 umfassend seine kennzeichnenden Merkmale, ein Andockverfahren nach Anspruch 16, eine Verwendung eines Segmentventils nach Anspruch 20 gelöst.

Weitere vorteilhafte Ausgestaltungen der Erfindung bilden die Gegenstände jeweiliger Unteransprüche.

Erfindungsgemäß sind zumindest zwei der Absperrorgane in gegenseitigen Hintergriff verbringbar.

Vorteilhafte Ausführungsformen der Andockvorrichtung haben Doppelklappen, die zumindest hälftig vollständig aus Kunststoff bestehen.

Die Absperrorgane der Mehrfachklappe erfindungsgemäßer Andockvorrichtungen werden beispielsweise ausschließlich mittels eines Angriffs an ihrem Außenumfang verriegelt, sodass in der bevorzugt darauf hin erst erreichbaren Durchflussstellung kein Aufschnäbeln mehr befürchtet werden muss. Ferner ermöglicht der Hintergriff der Absperrorgane ineinander eine grundsätzliche Umgestaltung der Mehrfachklappenvorrichtungen unter Wahrung des Mehrfachklappenprinzips mit gemeinsamer Rotationsachse, weil das Verschließen nicht mehr ausschließlich im Achsbereich vorgesehen werden muss, sondern bevorzugt über den Umfang der Absperrorgane verteilt stattfinden kann. Wurden bisher immer auch in aufwändigen Gehäusekonstruktionen schon Verspannungen der Teller über massive Wellen oder Wellenstummel und Lagerungen derselben gelöst, kann nun das Gehäuse deutlich weniger aufwändig gefertigt werden, sodass Kostenvorteile erwartet werden dürfen. Auch hier sind nun andere Materialien einsetzbar, nicht nur für die Absperrorgane selbst. Beispielsweise eine Gehäusehälfte einer Doppelklappe könnte aus Kunststoff bestehen. Die Kombination von Kunststoff und Metall, beispielsweise Kunststoff auf der Seite eines Einweggebindes und Metall auf einer Vorrichtungsseite, ist nun möglich geworden, ohne die präzise Wirkungsweise der Mehrfachklappentechnik verlassen zu müssen. Somit ist es gelungen, eine Verbindung von Edelstahlarmaturen mit Single-Use-Einheiten oder von Single-Use-Einheiten untereinander zu realisieren.

Das erfindungsgemäße Andockverfahren zum kontaminationsfreien Verbinden zweier Gebinde oder Rohrleitungen nutzt eine solche Andockvorrichtung. Das Andockverfahren ist automatisierbar und sicher.

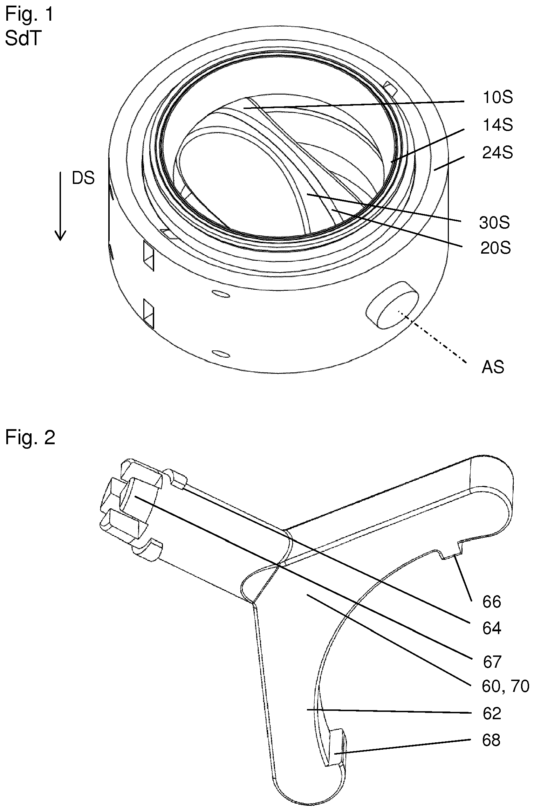

Nachfolgend wird neben dem oben bereits beschriebenen Stand der Technik (Figur 1) die Erfindung anhand von in weiteren Figuren dargestellten Ausführungsbeispielen näher beschrieben. Es zeigen
**Fig. 1** eine perspektivische Darstellung einer angedockten Dreifachklappenvorrichtung nach dem **Stand der Technik** in einer Offenstellung der Klappe,
**Fig. 2** eine perspektivische Darstellung eines Werkzeugs zum Bedienen einer erfindungsgemäßen Mehrfachklappenvorrichtung nach einem ersten Ausführungsbeispiel für solch ein Werkzeug,
**Fig. 3** eine perspektivische Darstellung eines Schnittes durch eine erfindungsgemäße Andockvorrichtung nach einem ersten Ausführungsbeispiel einer solchen Andockvorrichtung in Ausrichtung zum Vorbereiten eines Anlegens der später anzudockenden Teile,
**Fig. 4** die Andockvorrichtung aus Figur 3 nach dem mittels einer gemeinsamen Drehung eines der aneinander angelegten Teile relativ zum anderen Teil erfolgten Andocken mit ihrer Mehrfachklappe in Blockierstellung,
Fig. 5A die Andockvorrichtung aus Figur 3 nach dem Andocken mit ihrer Mehrfachklappe in Blockierstellung, in einem abweichenden Schnitt, jetzt quer zur Rotationsachse der Mehrfachklappe,
Fig. 5B die Andockvorrichtung aus Figur 5A in Durchlassstellung, ebenfalls quer zur Rotationsachse der Mehrfachklappe aufgeschnitten mit perspektivischem Blick auf die ungeschnitten abgebildete Mehrfachklappe mit eingesetztem oder integriert ausgeführtem Werkzeug einer erfindungsgemäßen Andockvorrichtung,
**Fig.** 6 eine perspektivische Darstellung einer Hälfte der Andockvorrichtung nach einer Aktiv-Passiv-Variante in Ausführung des Absperrorgans als Aktivteller mit Werkzeug und
**Fig. 7** eine perspektivische Darstellung der Hälfte der Andockvorrichtung aus Figur 6, allerdings in Ausführung als Passivteller, in den nur erforderlichenfalls auch ein Werkzeug einsetzbar ist,
**Fig. 8** eine perspektivische Darstellung einer erfindungsgemäßen Andockvorrichtung nach einem zweiten Ausführungsbeispiel einer solchen Andockvorrichtung in Ausrichtung zum Vorbereiten eines Anlegens der zu verriegelnden Teile,
**Fig. 9** eine perspektivische Darstellung der Andockvorrichtung aus Fig. 8 nach dem Anlegen der Teile zum Vorbereiten eines Andockens mit gleichzeitiger Klappen- und Gehäuseverriegelung,
**Fig. 10** die Andockvorrichtung aus Fig. 9 nach dem Andocken in von außen sofort erkennbarer verriegelter Stellung,
**Fig. 11** eine separate perspektivische Darstellung eines der Teile der Andockvorrichtung aus Figur 8 mit Sicht von schräg oben auf zwei abweichend ausgeführte Verschlusspaarteile für Klappe und Gehäuse,
**Fig. 12** eine Draufsicht in Durchflussrichtung auf den unteren Teil der Figur 11,
**Fig. 13** eine erste Seitenansicht auf den in Figur 11 dargestellten Teil der Andockvorrichtung nach dem zweiten Ausführungsbeispiel,
**Fig. 14** eine zweite Seitenansicht auf den in Figur 11 dargestellten Teil der Andockvorrichtung nach dem zweiten Ausführungsbeispiel,
**Fig. 15** einen Verschlussdeckel, der statt dem weiteren Teil der Andockvorrichtung auf den in Figur 11 dargestellten Teil der Andockvorrichtung aufgesetzt werden kann, beispielsweise zum Schutz bei einem Transport, und
**Fig. 16** ein zweites Ausführungsbeispiel eines Werkzeugs zum Andocken und Verstellen der Andockvorrichtung nach dem zweiten Ausführungsbeispiel in eine Durchflussstellung in perspektivischer Darstellung.

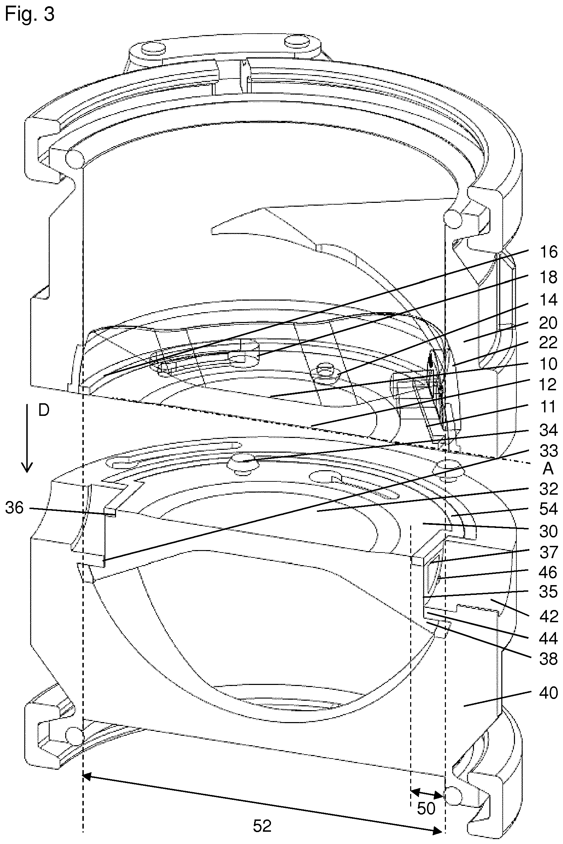

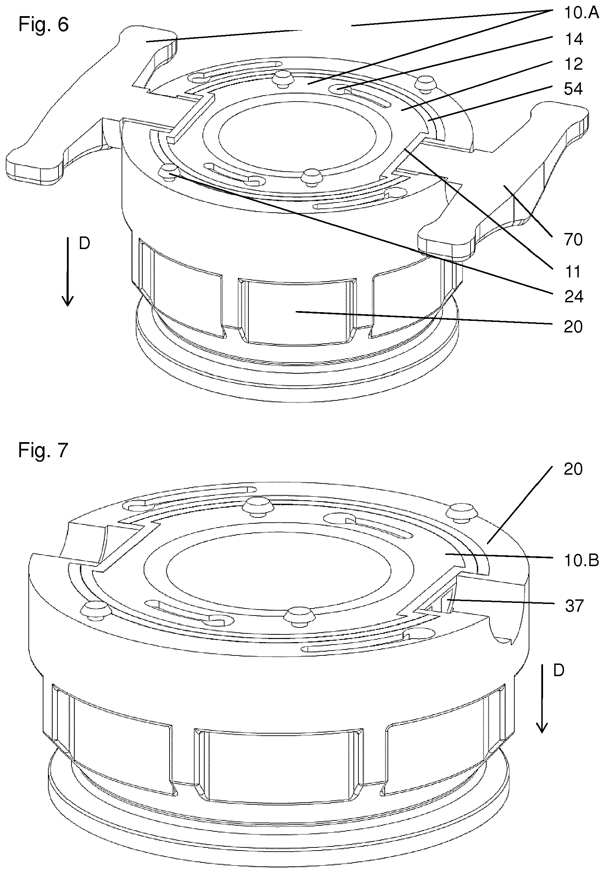

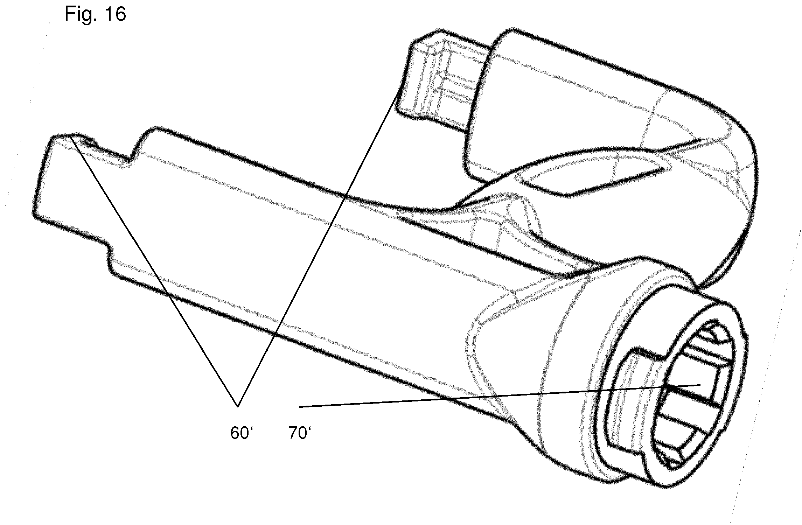

Erfindungsgemäße Ausführungsbeispiele der Andockvorrichtung sind in den **Figuren 3 bis 5B** dargestellt. Die dargestellten Andockvorrichtungen weisen als Absperrorgane entweder Aktiv-teller 10.A und / oder Passivteller 10.B auf, die insbesondere den **Figuren 6 und 7** hälftigen Darstellungen hinsichtlich einiger gemeinsamer Merkmale genauer zu entnehmen sind. Die Erfindung deckt mithin sämtliche Kombinationen aktiv-aktiv, aktiv-passiv sowie passiv-passiv ab. Ein Beispiel eines einsetzbaren Werkzeugs 60, 70 nach einem ersten Ausführungsbeispiel ist in **Figur 2** in separater Darstellung gezeigt. Nach Figur 2 greift das Werkzeug nicht nur in das Gehäuse sondern auch in radialer Richtung in das Absperrorgan ein. Zum Vergleich ist in **Figur 16** ein zweites Ausführungsbeispiel eines Werkzeugs gezeigt, welches zwar in die Gehäuse einzugreifen, dabei allerdings einen männlichen Fortsatz zumindest eines der Absperrorgane in entsprechenden Vertiefungen aufzunehmen bestimmt ist.

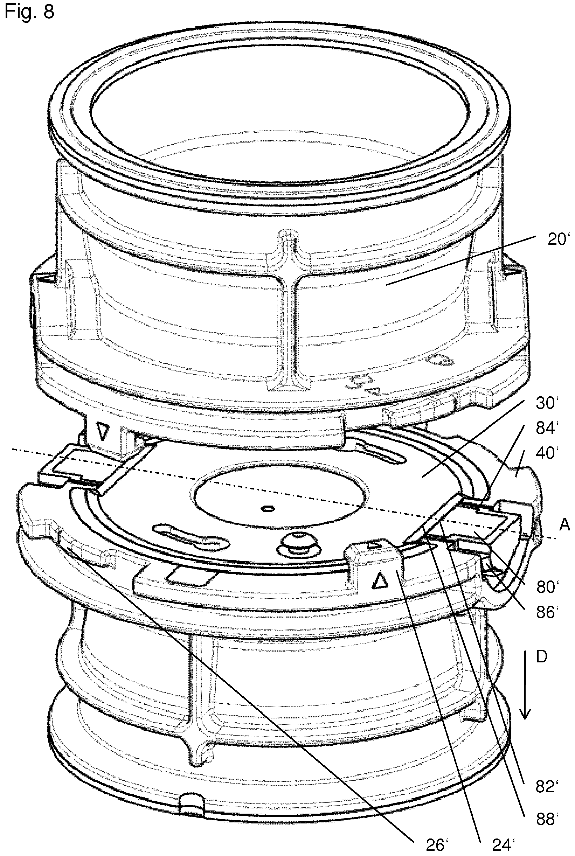

Die Bezugszeichen sind zur besseren Übersicht nicht sämtlich in allen Vergrößerungsstufen eingetragen. Die nachfolgende Figurenbeschreibung umfasst die weitere Beschreibung des Andockverfahrens, und der Verwendung des Segmentventils, nicht allerdings eine Beschreibung der bekannten Mehrfachklappenvorrichtung aus Figur 1. Die erfindungsgemäße Andockvorrichtung ist in zwei Ausführungsformen dargestellt, wobei häufig die Bezugszeichen des zweiten Ausführungsbeispiels in den Figuren 8 bis 14 apostrophiert sind. Für das zweite Ausführungsbeispiel der Andockvorrichtung gilt die nachfolgende Beschreibung weitrechend analog und kann auch ohne ausdrückliche Mitnennung der apostrophierten Bezugszeichen in Beschreibung und Ansprüchen nachvollzogen werden.

Die erfindungsgemäße Andockvorrichtung für ein kontaminationsfreies Verbinden beispielsweise zweier Gebinde oder zweier Leitungen umfasst ein geteiltes Gehäuse 20, 40 und eine Mehrfachklappe mit zumindest zwei um eine gemeinsame Achse A drehbaren Tellern 10, 30.

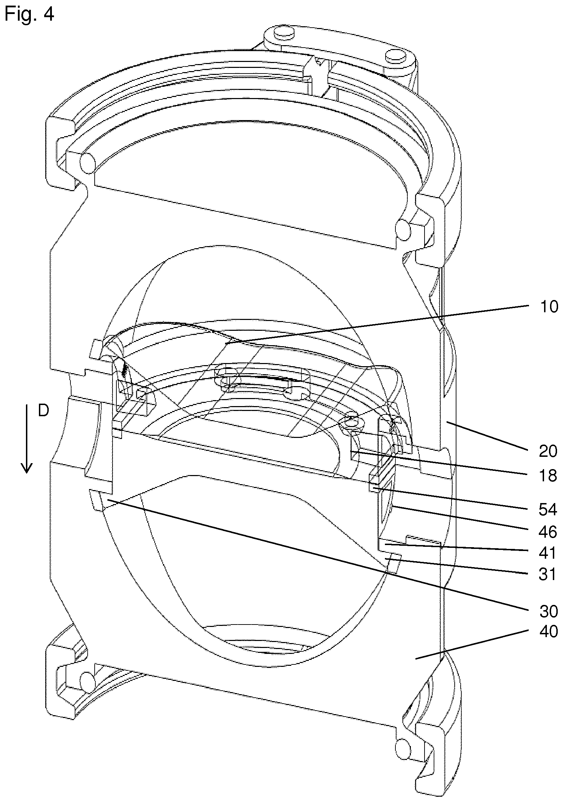

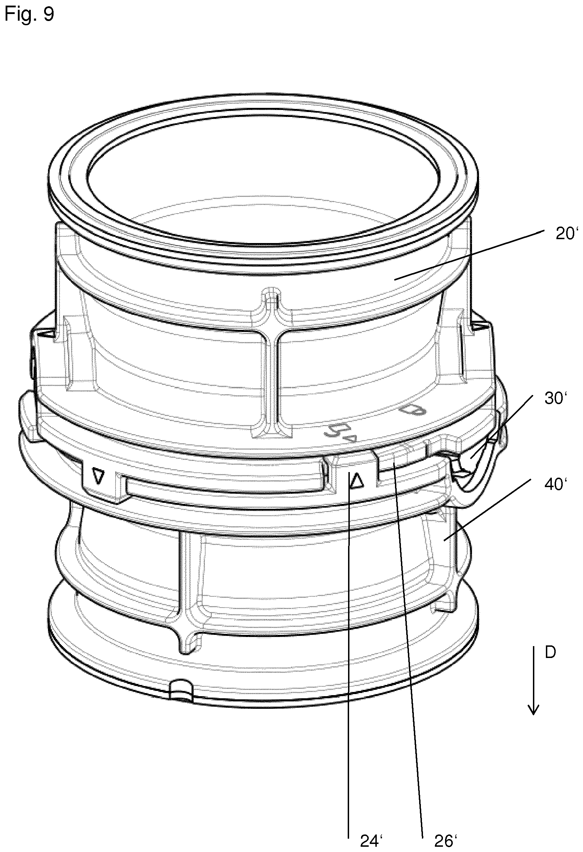

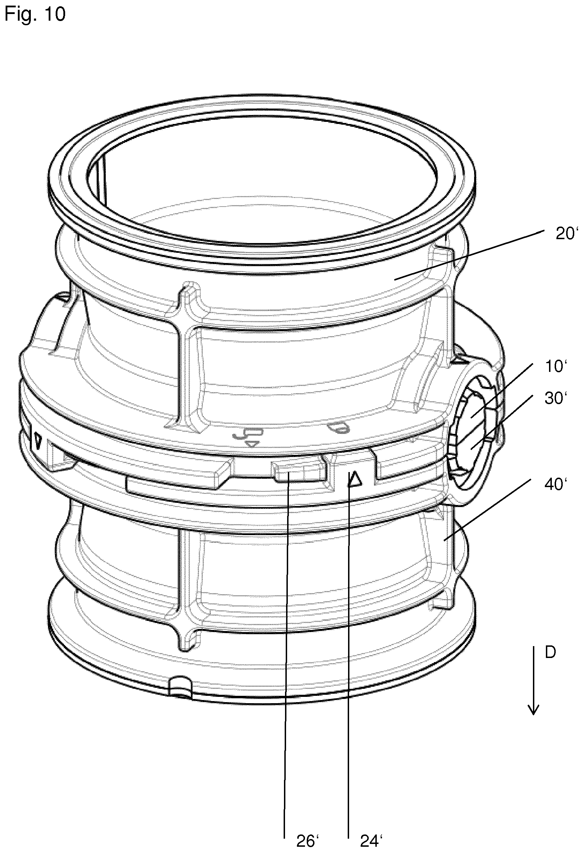

Zunächst müssen dem erfindungsgemäßen Andockverfahren folgend die beiden Hälften der Andockvorrichtung entlang einer Durchflussrichtung D in einer bestimmten Drehausrichtung (Figuren 3, 8) zueinander angesetzt (Figur 9) werden, um dann durch Drehung um eine in Durchflussrichtung D ausgerichtete Achse zueinander angedockt zu werden. Die Figuren 4 und 10 zeigen diesen Zustand nach dem Andocken, aus dem heraus erst gesichert das gemeinsame Rotieren der Teller 10, 30 um die gemeinsame Achse A beginnen kann. Erst wenn nach dem Gebrauch für beispielsweise ein Umfüllen eines Schüttgutes durch die Andockvorrichtung hindurch ein vollständiges Verschließen der Doppelklappe gelungen ist, rastet nach dem dargestellten Ausführungsbeispiel in Figur 4 eine Rastnase eines der Teller 10, 30 in eine Rastvertiefung 46 eines der Gehäuse 20, 40 ein, sodass ein Abdocken automatisiert und gesichert erfolgen kann. Alternativ oder zusätzlich ist nach einem vorteilhaften Andockverfahren ein auch zum Entsperren einsetzbares Rotierwerkzeug 70 mittels eines Eindringens in eine Blockadeeinrichtung 18 einführbar. Sein Einführen in die Blockadeeinrichtung 18 bewirkt die Freigabe für das Rotieren der Teller. Das Werkzeug wird besonders bevorzugt solange in der Blockadeeinrichtung 18 festgehalten, bis die Klappen den Durchfluss wieder vollständig blockierend quergestellt sind. Diese Blockadeeinrichtung 18 macht die Handhabung besonders sicher.

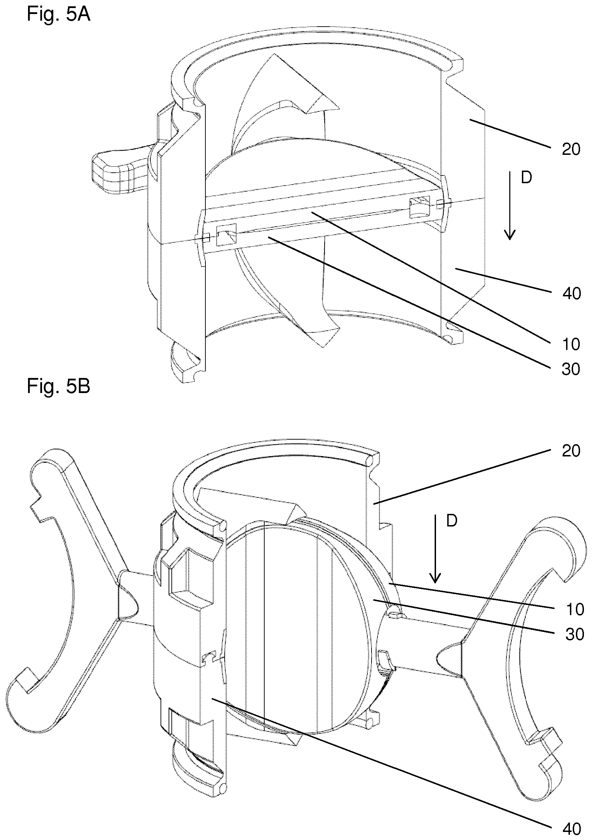

Zum Umschalten zwischen der Andockstellung (Figuren 4, 5A, 10) und der Durchflussstellung (Figur 5B) werden die Teller 10, 30 nach den dargestellten Ausführungsbeispielen als Doppelklappe um 90° um die gemeinsame Achse A rotiert. Dazu wird beispielsweise das Rotierwerkzeug 60, 70 nach Figur 2 oder das Rotierwerkzeug 70` nach Figur 16 verwendet, das gleichzeitig nach den gezeigten Ausführungsbeispielen auch ein bei dem dem Öffnen vorangehenden Andocken verwendetes Verschlusswerkzeug 60' ist.

Die Teller 10, 30 umfassen vorliegend entlang der gemeinsamen Achse A auf zwei Seiten des jeweiligen Tellers 10, 30 jeweils mit einem Halbrundkragen 31 das jeweilige Gehäuse 20, 40 und sind somit nach dem Andocken bezüglich der Gehäuse 20, 40 um die gemeinsame Achse A rotierbar gelagert, weil die Gehäuse 20, 40 gemeinsam nach dem Andocken eine gemeinsame Rundkontur 41 ausbilden, die von jedem Halbrundkragen 31 teilumfänglich umfasst ist.

Die Teller 10, 30 sind derart in dem jeweiligen Gehäuse 20, 40 angeordnet, dass die Teller 10, 30 in der Andockstellung mit Schnittstellenflächen 12, 32 zumindest teilflächig aneinander anliegen und gegeneinander abgedichtet 54 sind. Dazu liegt eine Dichtung 54 in einer Kontur 36 der Teller 10, 30.

Gemäß den dargestellten Ausführungsbeispielen hintergreifen sich im angedockten Zustand die als Teller 10, 30 ausgebildeten Absperrorgane gegenseitig mit Verschlusspaarteilen 14, 18, 34 eines Bajonettverschlusses über den Umfang der Schnittstellenflächen 12, 32 verteilt. Der Hintergriff erfolgt in einem radial äußeren Randbereich 50 innerhalb des Außendurchmessers 52. Da nach dem dargestellten Ausführungsbeispiel beide Teller 10, 30 positive 14, 34 wie negative 18 Verschlusspaarteile aufweisen, ist ein gegenseitiger Hintergriff der Teller 10, 30 in einander gezeigt.

Alternativ sind Teller Bestandteil vorteilhafter Ausführungsformen, welche ausschließlich positive oder negative Verschlussteilpaare aufweisen oder nicht gleich selbst das Aneinanderverriegeln übernehmen, wie es dem Bajonettprinzip folgend der Fall ist. Es sind auch Ausführungsformen nach der Erfindung konstruiert, die ein anderweitiges Verriegeln ineinander mittels eines Aktuators ermöglichen, für deren Auslösen lediglich der vollständige Eingriff der Verschlusspaarteile Voraussetzung ist.

Die als Absperrorgane ausgebildeten Teller 10 hintergreifen gemäß Figur 3 vor dem Erreichen der Andockstellung aber auch in der Andockstellung selbst einen nach radial innen hervorstehenden Fortsatz 44 ihres Gehäuses 20, 40 mit einem radial nach außen den Fortsatz zumindest teilweise umgebenden Überstand 38.

In den Darstellungen der Figuren 2 bis 7 sind die Absperrorgane der Andockvorrichtung grundsätzlich kreisrund mit dem Außendurchmesser 52 geformt. Kein funktionelles Element des Absperrorgans ragt radial über diesen Außendurchmesser 52 hinaus, insbesondere kein Wellenstummel oder dergleichen.

In den Absperrorganen ist eine Einbuchtung 11 am Umfang nach radial innen zurückgenommen. In diese Einbuchtung 11 ist das radial von außen her das jeweilige Gehäuse 20, 40 durchdringende Verschlusswerkzeug 60, zum gemeinsamen Verdrehen des Absperrorgans mit dem Gehäuse 20, 40 in Umfangsrichtung einsetzbar. Auch die Gehäusehälften werden dabei mittels Bajonettverschlussprinzip verriegelt.

Über den Umfang des Absperrorgans verteilt sind zwei einander gegenüberliegend angeordnete Rücksprünge 33 vorgesehen, dem bzw. denen eine entsprechende vom sonstigen Formverlauf in Umfangsrichtung abweichende Sonderform des jeweiligen Gehäuses 20, 40 entspricht, zum Verhindern eines Verdrehens des Absperrorgans in Umfangsrichtung. Statt dieser Rücksprünge sind bei weiteren vorteilhaften Ausführungsformen alternativ positiv nach radial außen erhabene Vorsprünge vorgesehen.

Dem Umfang des Absperrorgans folgend ist an zumindest einer Position ein Rotierwerkzeug 70 durch zumindest eines der Gehäuse 20, 40 hindurch an zumindest eine Empfangskontur 37 zumindest eines der Absperrorgane in Formschluss bringbar, um die Absperrorgane aus der Andockstellung in die Durchflussstellung drehen zu können.

Für das Betätigen der Vorrichtung, nämlich das Andocken bei Drehung einer Vorrichtungshälfte um eine zur Durchflussrichtung D parallele Achse und das Rotieren um die gemeinsame Achse A zum Erreichen der Durchflussstellung, ist ein einziges, an ausschließlich einer Umfangsposition in die Gehäuse 20, 40 eindringendes Werkzeug erforderlich, welches als Verschlusswerkzeug und als Rotationswerkzeug dient. Dargestellt ist jedoch eine vorteilhafte Ausführungsform mit zwei solchen Werkzeugen, die einander gegenüberliegend durch die Gehäuse hindurch eingesetzt sind.

Das Gehäuse 20, 40 weist an einer dem Außenumfang eines der Absperrorgane zugewandten Stelle, nahe des Austritts der gemeinsamen Achse A, die Rastvertiefung 46 und/oder einen Sensor auf (nicht dargestellt), welcher/welcher eine nicht dargestellte Rastnase und/oder einen Sender des Absperrorgans zu empfangen bestimmt ist, sobald das Absperrorgan eine bestimmte Stellung einnimmt, insbesondere eine Schließstellung, aus der ein Abdockvorgang eingeleitet werden kann. Hieraus resultiert ein sicheres Handling der Andockvorrichtung.

Gemäß einem erfindungsgemäßen Andockverfahren werden mit einer solchen Vorrichtung zum Erreichen der Andockstellung die zwei Gehäuse 20, 40 mit ihrem jeweiligen Absperrorgan ineinander greifend und/oder einander hintergreifend aneinander angelegt und zueinander um eine in Durchflussrichtung ausgerichtete Verschlussachse verdreht. Das Verriegeln beider Teile der gezeigten Andockvorrichtung geschieht mithin mit einer gleichartigen Bewegung der beiden Teile relativ zueinander. Nach den gezeigten Ausführungsbeispiele bewirkt diese eine Bewegung gleichzeitig ein Verriegeln der Verschlussorgane und ein Verriegeln ihrer Gehäuse. Zusätzlich oder alternativ kann erfindungsgemäß ein andersartiger gleichzeitiger Verriegelungsvorgang der Gehäuse 20, 40 und ihrer Absperrorgane stattfinden, wobei die Gehäuse 20, 40 und ihre Absperrorgane jeweils direkt miteinander und/oder ineinander verriegelt werden.

Ein vorteilhaftes Andockverfahren setzt zum Erreichen der Andockstellung zunächst zumindest ein Verschlusswerkzeug zumindest eines der Gehäuse 20, 40 von radial außen nach radial innen durchdringend, radial innen mit zumindest dem jeweiligen Absperrorgan in Kontakt tretend, ein, insbesondere bevor die Gehäuse 20, 40 in Anlage aneinander gebracht werden. Mittels dieses Verschlusswerkzeugs wird eines der Gehäuse 20, 40 mit samt seinem Absperrorgan gegenüber dem anderen Gehäuse 20, 40 und gegenüber dessen Absperrorgan um eine in der Durchflussrichtung ausgerichtete Achse verdreht. Bevorzugt ist es dabei von außen erkennbar gemacht, wann die Verdrehung ein ausreichendes Ausmaß angenommen hat, um aus der Andockstellung heraus gesichert einen Umstellvorgang zum Erreichen einer Durchflussstellung einleiten zu können.

Die Andockvorrichtung wird/bleibt nach vorteilhaften Ausführungsformen hinsichtlich eines Verdrehens um eine in der Durchflussrichtung ausgerichtete Achse verriegelt, zumindest sobald/solange ein Umstellen zum Erreichen der Durchflussstellung und/oder ein Umstellen aus der Durchflussstellung heraus in eine Abdichtstellung erfolgt.

Zum Erreichen der Durchflussstellung wird zumindest ein Rotierwerkzeug zumindest eines der Gehäuse 20, 40 von radial außen nach radial innen durchdringend, radial innen mit zumindest dem jeweiligen Absperrorgan in Kontakt tretend, eingesetzt. Eindringende Elemente 67 des Werkzeugs 60, 70 erreichen dabei die Empfangskonturen 37 der Teller 10, 30. Ein sicherer Kraftschluss ist bei radialem Eindringen bis zum Erreichen eines Anschlags oder der in Figur 2 dargestellten Positivkontur 64 gegeben. Die Positivkontur 64 kann in eine Ausnehmung des Gehäuses 20, 40 eingedreht werden, um die Position zu sichern. Mittels des Rotierwerkzeugs werden sämtliche Absperrorgane um gemeinsame, quer zur Durchflussrichtung D angeordnete Achse A rotiert, in dem Kraft an dessen Armen 62 wirkt. Sind 90° Drehung erreicht, ist dies (nicht dargestellt) von außen erkennbar. Dann ist nämlich die maximal mögliche Öffnung für den Durchfluss erreicht. Ebenso ist es zweifelsfrei erkennbar, wann wieder eine vollständige Abdichtung sichergestellt ist, aus der heraus die Andockvorrichtung wieder aus ihrer Andockstellung gelöst werden kann. Das Rotierwerkzeug 70 hat an einem seiner Arme 62 einen Fortsatz 66 und eine Radialabflachung 68, die, wenn das Werkzeug nicht in die Klappe eingesetzt ist von außen an das Gehäuse und daran ausgebildete Rippen angelegt werden kann, um es zu drehen.

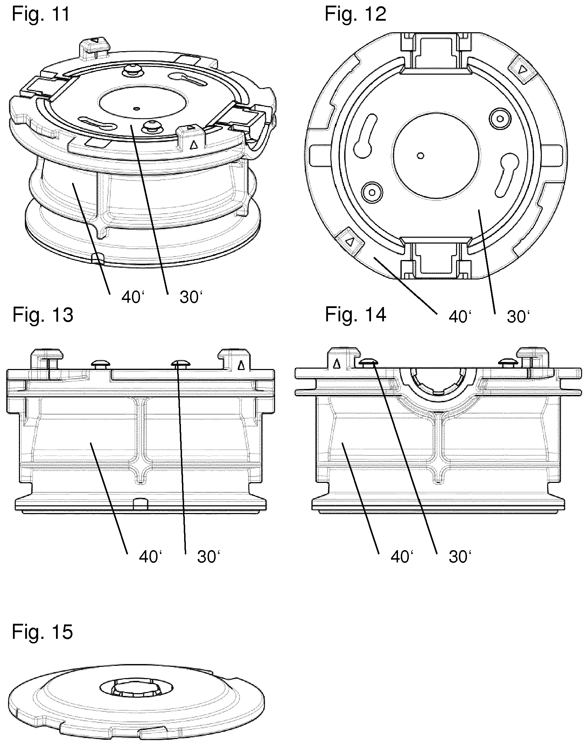

Sind nun oben in den Figuren **3** eine perspektivische Darstellung eines Schnittes durch eine erfindungsgemäße Andockvorrichtung nach einem ersten Ausführungsbeispiel einer solchen Andockvorrichtung in Ausrichtung zum Vorbereiten eines Anlegens der später anzudockenden Teile, **Fig. 4** die Andockvorrichtung aus Figur 3 nach dem mittels einer gemeinsamen Drehung eines der aneinander angelegten Teile relativ zum anderen Teil erfolgten Andocken mit ihrer Mehrfachklappe in Blockierstellung, **Fig. 5A** die Andockvorrichtung aus Figur 3 nach dem Andocken mit ihrer Mehrfachklappe in Blockierstellung, in einem abweichenden Schnitt, jetzt quer zur Rotationsachse der Mehrfachklappe, **Fig. 5B** die Andockvorrichtung aus Figur 5A in Durchlassstellung, ebenfalls quer zur Rotationsachse der Mehrfachklappe aufgeschnitten mit perspektivischem Blick auf die ungeschnitten abgebildete Mehrfachklappe mit eingesetztem oder integriert ausgeführtem Werkzeug einer erfindungsgemäßen Andockvorrichtung, **Fig. 6** eine perspektivische Darstellung einer Hälfte der Andockvorrichtung nach einer Aktiv-Passiv-Variante in Ausführung des Absperrorgans als Aktivteller mit Werkzeug und **Fig. 7** eine perspektivische Darstellung der Hälfte der Andockvorrichtung aus Figur 6, allerdings in Ausführung als Passivteller, in den nur erforderlichenfalls auch ein Werkzeug einsetzbar ist, beschrieben folgt nun zu den Figuren 8 bis 14 eine Beschreibung eines zweiten Ausführungsbeispiels eine erfindungsgemäßen Andockvorrichtung, nämlich zeigt Fig. 8 eine perspektivische Darstellung einer erfindungsgemäßen Andockvorrichtung nach dem zweiten Ausführungsbeispiel einer solchen Andockvorrichtung in Ausrichtung zum Vorbereiten eines Anlegens der zu verriegelnden Teile, Fig. 9 eine perspektivische Darstellung der Andockvorrichtung aus Fig. 8 nach dem Anlegen der Teile zum Vorbereiten eines Andockens mit gleichzeitiger Klappen- und Gehäuseverriegelung, Fig. 10 die Andockvorrichtung aus Fig. 9 nach dem Andocken in von außen sofort erkennbarer verriegelter Stellung, Fig. 11 eine separate perspektivische Darstellung eines der Teile der Andockvorrichtung aus Figur 8 mit Sicht von schräg oben auf zwei abweichend ausgeführte Verschlusspaarteile für Klappe und Gehäuse, Fig. 12 eine Draufsicht in Durchflussrichtung auf den unteren Teil der Figur 11, Fig. 13 eine erste Seitenansicht auf den in Figur 11 dargestellten Teil der Andockvorrichtung nach dem zweiten Ausführungsbeispiel und Fig. 14 eine zweite Seitenansicht auf den in Figur 11 dargestellten Teil der Andockvorrichtung nach dem zweiten Ausführungsbeispiel.

Auch das zweite Ausführungsbeispiel einer erfindungsgemäßen Andockvorrichtung hat zwei miteinander verriegelbare Gehäuse 20', 40' für zwei miteinander verriegelbare Absperrorgane. Als Absperrorgane sind nun aber Teller 10', 30' gezeigt, die entlang der gemeinsamen Achse A' einen sich in radialer Richtung über einen Nenndurchmesser des Tellers hinaus erstreckenden Fortsatz 80' aufweisen. Der Fortsatz 80' kann von dem Verschlusswerkzeug 60' nach dessen zweiten Ausführungsbeispiel der Figur 16 umgriffen werden. Der Fortsatz 80' weist zum Kommunizieren mit dem Verschlusswerkzeug 60' axiale Rippen 86' auf. Er ist mit einer abdichtenden Naht 82', 88' an dem Teller 30' befestigt oder integral mit dem Teller ausgeführt, eine Nut für eine Dichtung lassend. Nach axial außen verjungt verlaufend weist der Fortsatz 80' einen gestuften Kern 84' auf, der wesentlich zur Festigkeit beiträgt.

Das Gehäuseverschlussprofil ist nach dem zweiten Ausführungsbeispiel als ein erstes, radial äußeres Gehäuseverschlusspaarteil 24' und ein zweites, radial inneres Gehäuseverschlusspaarteil 26' ausgeführt. Dieses Gehäuseverschlussprofil erleichtert ein von außen unmissverständlich erkennbares vollständiges Andocken der Vorrichtungsteile mit der Gewissheit, dass nun auch die Verschlussorgane im Inneren der Gehäusedrehung gefolgt sein müssen.

In Fig. 15 ist ein Verschlussdeckel gezeigt, der statt dem weiteren Teil der Andockvorrichtung auf den in Figur 11 dargestellten Teil der Andockvorrichtung aufgesetzt werden kann, beispielsweise zum Schutz bei einem Transport.

In Fig. 16 ist das oben bereits genannte zweite Ausführungsbeispiel eines Werkzeugs zum Andocken und Verstellen der Andockvorrichtung nach dem zweiten Ausführungsbeispiel in eine Durchflussstellung in perspektivischer Darstellung gezeigt.

### Bezugszeichenliste:

- 10: erster Teller
- 10.A: Aktivklappe
- 10.B: Passivklappe
- 11: Einbuchtung
- 12: erste Schnittstellenfläche
- 14: erstes Verschlusspaarteil
- 16: Kontur
- 18: Blockadeeinrichtung

- 20: erstes Gehäuse
- 24: erstes Gehäuseverschlusspaarteil
- 26': zweites Gehäuseverschlusspaarteil

- 30: zweiter Teller
- 31: Halbrundkragen
- 32: zweite Schnittstellenfläche
- 33: Rücksprung
- 34: zweites Verschlusspaarteil
- 36: Kontur
- 37: Empfangskontur
- 38: Überstand

- 40: zweites Gehäuse
- 41: Rundkontur
- 44: Fortsatz
- 46: Rastvertiefung

- 50: radial äußerer Randbereich
- 52: Außendurchmesser
- 54: Dichtung
- 60: Verschlusswerkzeug
- 62: Arm
- 64: teilumfänglich umlaufende Positivkontur
- 66: Fortsatz
- 67: eindringendes Element
- 68: Radialabflachung

- 70: Rotierwerkzeug

- 80': Fortsatz
- 82': Naht
- 84': Stufe
- 86': Rippe
- 88': Naht

- A: gemeinsame Achse
- D: Durchflussrichtung

## Patentansprüche

1. Andockvorrichtung, für ein kontaminationsfreies Verbinden beispielsweise zweier Gebinde oder zweier Leitungen, mit
1.1 zum Umschalten zwischen einer Andockstellung und einer Durchflussstellung um eine gemeinsame Achse (A) drehbaren Absperrorganen einer Klappe, die einen Durchfluss, beispielsweise eines Schüttgutes, in der Andockstellung zu blockieren und in der Durchflussstellung durchzulassen bestimmt ist,
1.2 welches Absperrorgan, jeweils in einem Gehäuse (20, 40) gelagert und derart in dem jeweiligen Gehäuse (20, 40) angeordnet sind, dass die Absperrorgane und die Gehäuse (20, 40) in der Andockstellung mit Schnittstellenflächen (12, 32) zumindest teilflächig aneinander anliegen und gegeneinander abgedichtet sind, und
1.3 zumindest eines der Absperrorgane das weitere Absperrorgan zu hintergreifen bestimmt ist,
**dadurch gekennzeichnet, dass** beide Teile jeder Seite, demnach die Gehäuse (20, 40) und die in den Gehäusen (20, 40) gelagerten Absperrorgane, mittels einer synchronen und gleichartigen Bewegung, nämlich eine Drehung um eine in Durchflussrichtung D ausgerichtete Achse, in eine jeweils miteinander, Gehäuse (20, 40) mit Gehäuse (20, 40) und Absperrorgan mit Absperrorgan, verriegelte Stellung verstellbar sind.

2. Andockvorrichtung nach Anspruch 1,
**dadurch gekennzeichnet, dass** die Absperrorgane als Teller (10, 30) mit jeweils zwei einander gegenüberliegenden Flachseiten ausgebildet sind und dass die Teller (10, 30) miteinander verriegelt in der Durchflussstellung einen beidseitigen Durchfluss erlauben.

3. Andockvorrichtung nach einem vorangehenden der Ansprüche,
**dadurch gekennzeichnet, dass** der Hintergriff über den Umfang der Schnittstellenflächen (12, 32) verteilt angeordnet ist.

4. Andockvorrichtung nach einem der vorangehenden Ansprüche,
**dadurch gekennzeichnet, dass** der Hintergriff in einem radial äußeren Randbereich (50) angeordnet ist.

5. Andockvorrichtung nach einem der vorangehenden Ansprüche,
**dadurch gekennzeichnet, dass** zwei Absperrorgane sich gegenseitig hintergreifen.

6. Andockvorrichtung nach einem der vorangehenden Ansprüche,
**dadurch gekennzeichnet, dass** der Hintergriff als zumindest zweifacher Bajonettverschluss ausgebildet ist, von welchen Verschlusspaaren eines in der Durchflussstellung dem durchfließenden Produktstrom begegnend in der Umfangsverteilung der Verschlusspaare angeordnet ist.

7. Andockvorrichtung nach einem der vorangehenden Ansprüche,
**dadurch gekennzeichnet, dass** um den Umfang der Schnittstellenflächen (12, 32) eine zumindest teilumfänglich umlaufende Dichtung (54) in einer Kontur (16, 36) des Absperrorgans angeordnet ist

8. Andockvorrichtung nach einem der vorangehenden Ansprüche,
**dadurch gekennzeichnet, dass** zumindest eines der Absperrorgane als eine Passivteilklappe (10.B) ausgebildet ist, die in der Andockstellung einen nach radial innen hervorstehenden Fortsatz (44) ihres Gehäuses (20, 40) mit einem radial nach außen größeren Überstand (38) hintergreift.

9. Andockvorrichtung nach einem der vorangehenden Ansprüche,
**dadurch gekennzeichnet, dass** zumindest eines der Absperrorgan als eine Aktivteilklappe (10.A) ausgebildet ist.

10. Andockvorrichtung nach einem der vorangehenden Ansprüche,
**dadurch gekennzeichnet, dass** zumindest eines der Absperrorgane kreisrund mit einem Außendurchmesser (52) geformt ist und kein funktionelles Element des Absperrorgans radial über diesen Außendurchmesser (52) hinausgehend ausgebildet ist.

11. Andockvorrichtung nach einem der vorangehenden Ansprüche,
**dadurch gekennzeichnet, dass** zumindest eine Einbuchtung (11) am Umfang des Absperrorgans nach radial innen zurückgenommen ist, in welche Einbuchtung (11) ein radial von außen her das jeweilige Gehäuse (20, 40) durchdringendes Verschlusswerkzeug (60), zum Verdrehen des Absperrorgans in Umfangsrichtung, einsetztbar ist.

12. Andockvorrichtung nach einem der vorangehenden Ansprüche,
**dadurch gekennzeichnet, dass** über den Umfang des Absperrorgans verteilt zwei einander gegenüberliegend angeordnete oder zumindest ein einziger Fortsatz bzw. Fortsätze oder Rücksprung bzw. Rücksprünge (33) vorgesehen ist bzw. sind, dem bzw. denen eine entsprechende vom sonstigen Formverlauf in Umfangsrichtung abweichende Sonderform des jeweiligen Gehäuses (20, 40) entspricht, zum Verhindern eines Verdrehens des Absperrorgans in Umfangsrichtung.

13. Andockvorrichtung nach einem der vorangehenden Ansprüche,
**dadurch gekennzeichnet, dass** dem Umfang des Absperrorgans folgend an zumindest einer Position ein Rotationswerkzeug durch zumindest eines der Gehäuse (20, 40) hindurch an zumindest eine Empfangskontur (37) zumindest eines der Absperrorgane in Formschluss bringbar ist, um die Absperrorgane aus der Andockstellung in die Durchflussstellung drehen zu können.

14. Andockvorrichtung nach einem der vorangehenden Ansprüche,
**dadurch gekennzeichnet, dass** für das Betätigen der Vorrichtung, nämlich das Andocken und das Umstellen zum Erreichen der Durchflussstellung, ein einziges, an ausschließlich einer Umfangsposition in die Gehäuse (20, 40) eindringendes Werkzeug erforderlich ist, welches als Verschlusswerkzeug und als Rotationswerkzeug dient.

15. Andockvorrichtung nach einem der vorangehenden Ansprüche,
**dadurch gekennzeichnet, dass** das Gehäuse (20, 40) an einer dem Außenumfang eines der Absperrorgane zugewandten Stelle, eine Rastvertiefung (46) und/oder einen Sensor aufweist, welcher/welcher eine Rastnase und/oder einen Sender des Absperrorgans zu empfangen bestimmt ist, sobald das Absperrorgan eine bestimmte Stellung einnimmt, aus der ein Abdockvorgang eingeleitet werden kann.

16. Andockverfahren zum kontaminationsfreien Verbinden zweier Gebinde oder Rohrleitungen mit einer Andockvorrichtung nach einem der vorangehenden Ansprüche,
**dadurch gekennzeichnet, dass** zum Erreichen der Andockstellung die zwei Gehäuse (20, 40) mit ihrem jeweiligen Absperrorgan einander hintergreifend aneinander angelegt und zueinander um eine in Durchflussrichtung ausgerichtete Verschlussachse verdreht werden und/oder ein andersartiger gleichzeitiger Verriegelungsvorgang der Gehäuse (20, 40) und ihrer Absperrorgane stattfindet, wobei die Gehäuse (20, 40) und ihre Absperrorgane jeweils direkt miteinander und/oder ineinander verriegelt werden oder
zum Erreichen der Andockstellung die zwei Gehäuse (20, 40) gemeinsam mit ihrem jeweiligen Absperrorgan jeweils Gehäuse (20) mit Gehäuse (40) bzw. Absperrorgan mit Absperrorgan einander hintergreifend aneinander angelegt und gleichartig zueinander bewegt werden, sodass zwei auf diese gemeinsame Bewegung zurückzuführende gleichzeitige Verriegelungsvorgänge, erstens der Gehäuse (20, 40) untereinander und zweitens ihrer Absperrorgane untereinander, stattfinden, wobei die Gehäuse (20, 40) und ihre Absperrorgane jeweils direkt miteinander und/oder ineinander verriegelt werden.

17. Andockverfahren nach Anspruch 16,
**dadurch gekennzeichnet, dass** zum Erreichen der Andockstellung zunächst zumindest ein Verschlusswerkzeug zumindest eines der Gehäuse (20, 40) von radial außen nach radial innen durchdringend, radial innen mit zumindest dem jeweiligen Absperrorgan in Kontakt tretend, eingesetzt wird, und dass mittels dieses Verschlusswerkzeugs eines der Gehäuse (20, 40) mit samt seinem Absperrorgan gegenüber dem anderen Gehäuse (20, 40) und gegenüber dessen Absperrorgan um eine in der Durchflussrichtung ausgerichtete Achse verdreht wird, und dass von außen erkennbar ist, wann die Verdrehung ein ausreichendes Ausmaß angenommen hat, um aus der Andockstellung heraus gesichert einen Umstellvorgang zum Erreichen einer Durchflussstellung einleiten zu können.

18. Andockverfahren nach einem der Ansprüche 16 oder 17,
**dadurch gekennzeichnet, dass** die Andockvorrichtung hinsichtlich eines Verdrehens um eine in der Durchflussrichtung ausgerichtete Achse verriegelt wird/bleibt, zumindest sobald/solange ein Umstellen zum Erreichen der Durchflussstellung und/oder ein Umstellen aus der Durchflussstellung heraus in eine Abdichtstellung erfolgt.

19. Andockverfahren nach einem der Ansprüche 16 bis 18,
**dadurch gekennzeichnet, dass** zum Erreichen der Durchflussstellung zumindest ein Rotierwerkzeug zumindest eines der Gehäuse (20, 40) von radial außen nach radial innen durchdringend, radial innen mit zumindest dem jeweiligen Absperrorgan in Kontakt tretend, eingesetzt wird und dass mittels des Rotierwerkzeugs sämtliche, Absperrorgane um eine klappeninterne, quer zur Durchflussrichtung angeordnete Achse rotiert wird, von außen erkennbar wird, wann die maximal mögliche Öffnung für den Durchfluss erreicht ist bzw. wann wieder eine vollständige Abdichtung sichergestellt ist, aus der heraus die Andockvorrichtung wieder aus ihrer Andockstellung heraus gelöst werden kann.

20. Verwendung einer Andockvorrichtung nach einem der Ansprüche 1 bis 15, mit einer zumindest zweiteiligen Mehrfachklappe, die um eine klappeninterne Achse drehbar in zumindest einem Gehäuseteil (20, 40) aufgenommen ist, in einer zumindest weitgehend kontaminationsfreien Verbindung zwischen einem Einweggebinde, das zumindest teilweise aus Kunststoff besteht, und einem Metallrohrleitungssystem oder -anschluss, wobei ein vollständig aus Kunststoff bestehender Verschluss des Einweggebindes ein Absperrorgan der Mehrfachklappe umfasst.

## Claims

1. Docking device for the contamination-free connection of two containers or two pipes, for example, with
1.1 shut-off elements of a flap which can be rotated about a common axis (A) to switch between a docking position and a flow position, which flap is intended to block a flow, for example of a bulk material, in the docking position and to let it through in the flow position,
1.2 which shut-off member is mounted in a housing (20, 40) and is arranged in the respective housing (20, 40) in such a way that, in the docking position, the shut-off members and the housings (20, 40) bear at least partially against one another with intersection surfaces (12, 32) and are sealed off from one another, and
1.3 at least one of the shut-off devices is intended to engage rearwards the other shut-off device,
**characterized in that** both parts on each side, i.e. the housings (20, 40) and the shut-off members mounted in the housings (20, 40), can be adjusted by means of a synchronous and homogeneous movement, namely a rotation about an axis aligned in the direction of flow D, into a position locked to one another, housing (20, 40) with housing (20, 40) and shut-off member with shut-off member.

2. Docking device according to claim 1,
**characterized in that** the shut-off members are designed as plates (10, 30) each with two flat sides opposite one another, and **in that** the plates (10, 30) in the flow position are locked to one another and permit the flow on both sides in the flow position.

3. Docking device according to one of the preceding claims, **characterized in that** the rear engagement is arranged distributed over the circumference of the interface surfaces (12, 32) .

4. Docking device according to one of the preceding claims, **characterized in that** the rear engagement is arranged in a radially outer edge region (50).

5. Docking device according to one of the preceding claims, **characterized in that** the two shut-off members engage with each other rearwards.

6. Docking device according to one of the preceding claims, **characterized in that** the rear engagement is designed as an least double bayonet lock, wherein one of the lock pairs in the flow position in which it meets the flowing product stream is arranged in the circumferential distribution of the lock pairs.

7. Docking device according to one of the preceding claims, **characterized in that** an at least partially circumferential seal (54) is arranged around the circumference of the interface surfaces (12, 32) in a contour (16, 36) of the shut-off member.

8. Docking device according to one of the preceding claims, **characterized in that** at least one of the shut-off members is designed as a passive part valve (10.B) which, in the docking position, engages rearwards of a radially inwardly projecting extension (44) of its housing (20, 40) with a radially outwardly larger projection (38).

9. Docking device according to one of the preceding claims, **characterized in that** at least one of the shut-off members is constructed as an active part flap (10.A).

10. Docking device according to one of the preceding claims, **characterized in that** at least one of the shut-off members is circularly shaped with an outer diameter (52) and no functional element of the shut-off member is formed to radially extend beyond this outer diameter (52).

11. Docking device according to one of the preceding claims, **characterized in that** at least one recess (11) on the circumference of the shut-off device is recessed radially inwards, into which recess (11) a closure tool (60), which penetrates the respective housing (20, 40) radially from the outside, can be inserted to rotate the shut-off device in the circumferential direction.

12. Docking device according to one of the preceding claims, **characterized in that** two projections are provided distributed over the circumference of the shut-off element, which are arranged opposite one another, or at least one individual projection or projections or recesses (33) is or are provided, to which corresponds a corresponding special shape of the respective housing (20, 40), which deviates from the other shape in the circumferential direction, for preventing the shut-off element from rotating in the circumferential direction.

13. Docking device after one of the preceding claims, **characterized in that**, following the circumference of the shut-off member, a rotary tool can be brought into positive engagement in at least one position through at least one of the housings (20, 40) to at least one receiving contour (37) of at least one of the shut-off members in order to be able to rotate the shut-off members from the docking position into the flow position.

14. Docking device according to one of the preceding claims, **characterized in that** for the operation of the device, namely the docking and the changeover to reach the flow position, a single tool is required which penetrates the housings (20, 40) at exclusively one circumferential position and which serves as a closing tool and as a rotation tool.

15. Docking device according to one of the preceding claims, **characterized in that** the housing (20, 40) has a detent recess (46) and/or a sensor at a point facing the outer circumference of one of the shut-off members, which are intended to receive a detent nose and/or a transmitter of the shut-off member as soon as the shut-off member takes up a specific position from which an undocking operation can be initiated.

16. Docking method for the contamination-free connection of two containers or pipelines to a docking device according to one of the preceding claims, **characterized in that**, in order to reach the docking position, the two housings (20, 40) with their respective shut-off members engaging one rearwards of the other are placed against one another and rotated relative to one another about a closure axis aligned in the direction of flow and/or a different simultaneous locking process of the housings (20, 40) and their shut-off members takes place, the housings (20, 40) and their shut-off members being locked directly to one another and/or into one another in each case or
in order to reach the docking position, the two housings (20, 40) together with their respective shut-off member, housing (20) with housing (40) or shut-off member with shut-off member, are placed against one another, engaging one rearwards of the other, and are moved in the same way with respect to one another, so that two simultaneous locking processes, firstly of the housings (20, 40) with respect to one another and secondly of their shut-off members with respect to one another, which are to be traced back to this common movement, take place, the housings (20, 40) and their shut-off members in each case being locked directly to one another and/or into one another.

17. Docking procedure according to claim 16,
**characterized in that**, in order to reach the docking position, at least one closure tool is firstly inserted, penetrating at least one of the housings (20, 40) from radially outside to radially inside, and coming into contact radially inside with at least the respective shut-off member, and **in that**, by means of this closing tool, one of the housings (20, 40) with its shut-off member is rotated with respect to the other housing (20, 40) and with respect to its shut-off member about an axis aligned in the direction of flow, and that it can be detected from the outside when the rotation has reached a sufficient extent in order to be able to initiate a change-over process for reaching a flow position from the docking position in a secured manner.

18. Docking method according to one of claims 16 or 17, **characterized in that** the docking device is/remains locked with respect to rotation about an axis aligned in the flow direction, at least as soon as/as long as a changeover to reach the flow position and/or a changeover from the flow position to a sealing position takes place.

19. Docking method according to one of claims 16 to 18, **characterized in that**, in order to reach the flow position, at least one rotating tool is used, penetrating at least one of the housings (20, 40) from radially outwards to radially inwards, and coming into contact radially inwards with at least the respective shut-off member, and **in that**, by means of the rotating tool, all the shut-off members are rotated about a clap-internal axis arranged transversely to the direction of flow, it can be seen from the outside when the maximum possible opening for the flow is reached and when a complete seal has been re-established from which the docking device can be released from its docking position.

20. Use of a docking device according to one of claims 1 to 15, with an at least two-part multiple flap, which is accommodated in at least one housing part (20, 40) so as to be rotatable about an axis inside the flap, in an at least substantially contamination-free connection between a disposable container, which consists at least partially of plastic, and a metal pipeline system or connection, wherein a closure of the disposable container consisting entirely of plastic encloses a shut-off member of the multiple flap.

## Revendications

1. Dispositif d'accouplement pour relier sans contamination par exemple deux fûts comprenant :
1.1 des dispositifs d'arrêt d'un clapet tournant autour d'un axe commun A entre une position d'accouplement et une position de passage, qui permet en position d'accouplement, par exemple de bloquer le passage d'un produit en vrac et libérer le passage en position de passage,
1.2 ce dispositif d'arrêt étant logé dans un boîtier (20, 40) et ainsi disposé dans le boîtier respectif (20, 40) de façon que les dispositifs d'arrêt et les boîtiers (20, 40) en position d'accouplement, s'appliquent l'un contre l'autre au moins partiellement par les surfaces, avec les surfaces d'interface (12, 32) et sont rendus étanches l'un par rapport à l'autre, et
1.3 au moins un des dispositifs d'arrêt est destiné à prendre par derrière l'autre dispositif d'arrêt,
**caractérisé en ce que**
les deux parties de chaque côté et ainsi les boîtiers (20, 40) et les dispositifs d'arrêt logés dans les boîtiers (20, 40), puissent être actionnés dans une position verrouillée, respectivement l'un avec l'autre, boîtier (20, 40) avec boîtier (20, 40) et dispositifs d'arrêt avec le dispositif d'arrêt par un mouvement de même nature et synchrone, à savoir une rotation autour d'un axe orienté dans la direction de passage D.

2. Dispositif d'accouplement selon la revendication 1,
**caractérisé en ce que**
les dispositifs d'arrêt sont réalisés sous forme de plateaux (10, 30) ayant respectivement deux côtés plats tournés l'un vers l'autre, et les plateaux (10, 30) sont verrouillés l'un à l'autre en position de passage pour permettre le passage du flux des deux côtés.

3. Dispositif d'accouplement selon l'une des revendications précédentes,
**caractérisé en ce que**
la prise par derrière est répartie à la périphérie des surfaces d'interface (12, 32).

4. Dispositif d'accouplement selon l'une des revendications précédentes,
**caractérisé en ce que**
la prise par derrière est prévue dans la zone du bord (50) radialement extérieur.

5. Dispositif d'accouplement selon l'une des revendications précédentes,
**caractérisé en ce que**
deux dispositifs d'arrêt se prennent réciproquement l'un derrière l'autre.

6. Dispositif d'accouplement selon l'une des revendications précédentes,
**caractérisé en ce que**
la prise par derrière est réalisée au moins comme double liaison de type fermeture-baïonnette, et parmi les paires de fermetures, une paire de fermetures en position passante est située face au flux de produit dans la répartition périphérique des parois de fermeture.

7. Dispositif d'accouplement selon l'une des revendications précédentes,
**caractérisé par**
un joint (54) au moins partiellement périphérique, autour de la périphérie des surfaces d'interface (12, 32), sur le contour (16, 36) du dispositif d'arrêt.

8. Dispositif d'accouplement selon l'une des revendications précédentes,
**caractérisé en ce qu'**
au moins l'un des dispositifs d'arrêt est réalisé sous la forme d'un volet partiel passif (10.B) qui, en position d'accouplement, a un prolongement (44) radialement en saillie vers l'intérieur de son boîtier (20, 40) en venant prendre derrière une partie en relief (38) plus importante radialement vers l'extérieur.

9. Dispositif d'accouplement selon l'une des revendications précédentes,
**caractérisé en ce qu'**
au moins l'un des dispositifs d'arrêt est réalisé sous la forme d'un volet actif (10.A).

10. dispositif d'accouplement selon l'une des revendications précédentes,
**caractérisé en ce qu'**
au moins l'un des dispositifs d'arrêt a une forme circulaire avec un diamètre extérieur (52) et aucun élément fonctionnel du dispositif d'arrêt ne dépasse radialement ce diamètre extérieur (52).

11. Dispositif d'accouplement selon l'une des revendications précédentes,
**caractérisé en ce qu'**
au moins un creux (11) est en retrait radialement vers l'intérieur à la périphérie du dispositif d'arrêt pour recevoir un outil de fermeture (60) traversant le boîtier (20, 40) respectif pour faire tourner les dispositifs d'arrêt dans la direction périphérique.

12. Dispositif d'accouplement selon l'une des revendications précédentes,
**caractérisé en ce que**
répartis sur la périphérie du dispositif d'arrêt, deux prolongements ou retraits (33) se font face, et auxquels correspond une forme particulière du boîtier (20, 40) respectif qui s'écarte du tracé normal de la forme dans la direction périphérique pour bloquer en rotation le dispositif d'arrêt dans la direction périphérique.

13. Dispositif d'accouplement selon l'une des revendications précédentes,
**caractérisé en ce que**
selon la périphérie du dispositif d'arrêt, dans au moins une position, un outil de rotation, traversant au moins l'un des boîtiers (20, 40) arrive sur au moins un contour récepteur (37) d'au moins l'un des dispositifs d'arrêt qui peut être mis en liaison de forme pour pouvoir tourner les dispositifs d'arrêt de leur position d'accouplement à leur position passante.

14. Dispositif d'accouplement selon l'une des revendications précédentes,
**caractérisé en ce que**
pour actionner le dispositif, à savoir réaliser l'accouplement et commuter pour arriver en position passante, il faut un unique outil qui pénètre dans les boîtiers (20, 40) exclusivement dans une position périphérique, cet outil servant d'outil de fermeture et d'outil de rotation.

15. Dispositif d'accouplement selon l'une des revendications précédentes,
**caractérisé en ce qu'**
à un endroit tourné vers la périphérie extérieure d'un dispositif d'arrêt, le boîtier (20, 40) comporte une cavité d'accrochage (46) et/ou un capteur qui sont destinés à recevoir un bec et/ou un émetteur d'un dispositif d'arrêt dès que le dispositif d'arrêt arrive dans une position déterminée à partir de laquelle peut commencer une opération de désaccouplement.

16. Dispositif d'accouplement pour relier sans contamination deux fûts ou conduites avec un dispositif d'accouplement selon l'une des revendications précédentes,
**caractérisé en ce que**
pour arriver dans la position d'accouplement, on applique les deux boîtiers (20, 40) avec leur dispositif d'arrêt respectif, l'un en prise derrière l'autre et on les tourne l'un par rapport à l'autre autour d'un axe de fermeture orienté dans la direction passante et/ou une autre telle une opération de verrouillage simultanée des boîtiers (20, 40) et de leurs dispositifs d'arrêt se fait,
les boîtiers (20, 40) et leurs dispositifs d'arrêt étant verrouillés respectivement directement l'un à l'autre et/ou l'un dans l'autre, ou
pour arriver à la position d'accouplement, les deux boîtiers (20, 40) sont appliqués en commun par leur dispositif d'arrêt respectif chaque fois boîtier (20) contre boîtier (40) ou dispositif d'arrêt contre dispositif d'arrêt avec prise par derrière et en même temps ils sont déplacés l'un par rapport à l'autre de façon à faire deux opérations de verrouillage simultanées par ce mouvement commun, en premier les boîtiers (20, 40) entre eux et en second lieu leurs dispositifs d'arrêt l'un contre l'autre, les boîtiers (20, 40) et leurs dispositifs d'arrêt étant respectivement verrouillés directement l'un à l'autre et/ou l'un dans l'autre.

17. Procédé d'accouplement selon la revendication 16,
**caractérisé en ce que**
- pour arriver dans la position d'accouplement, tout d'abord on traverse par au moins un outil de fermeture, au moins l'un des boîtiers (20, 40), radialement de l'extérieur vers radialement vers l'intérieur en mettant en contact avec au moins le dispositif d'arrêt respectif, et
- à l'aide de cet outil de fermeture on tourne autour d'un axe orienté dans la direction passant, l'un des boîtiers (20, 40) avec son dispositif d'arrêt par rapport à l'autre boîtier (20, 40) et par rapport à son dispositif d'arrêt, sont tournés autour d'un axe orienté dans la direction de passage, et que l'on puisse reconnaître de l'extérieur quand la rotation est suffisante pour pouvoir passer en sécurité de la position d'accouplement dans une position de commutation pour arriver en position de passage.

18. Procédé d'accouplement selon l'une des revendications 16 ou 17,
**caractérisé en ce que**
le dispositif d'accouplement est/reste verrouillé pour sa rotation autour d'un axe orienté dans la direction de passage, au moins aussi longtemps que dure la commutation pour arriver dans la position de passage et/ou pour commuter de la position de passage à la position étanche.

19. Procédé d'accouplement selon l'une des revendications 16 à 18,
**caractérisé en ce que**
pour arriver dans la position passante, au moins un outil rotatif d'au moins l'un des boîtiers (20, 40) traverse radialement de l'extérieur vers radialement à l'intérieur pour arriver en contact et avec au moins le dispositif d'arrêt respectif,
à l'aide de l'outil rotatif, on tourne tous les dispositifs d'arrêt autour d'un axe interne au volet transversal à la direction de passage, pour reconnaître de l'extérieur l'arrivée en position d'ouverture maximale possible pour le passage c'est-à-dire quand est de nouveau garantie l'étanchéité complète à partir de laquelle le dispositif d'accouplement peut de nouveau être ouvert à partir de sa position d'accouplement.

20. Application d'un dispositif d'accouplement selon l'une des revendications 1 à 15, comportant au moins un clapet multiple en deux parties tournant autour d'un axe interne au clapet dans au moins une partie de boîtier (20, 40), avec une liaison au moins pratiquement sans contamination entre un fût à usage unique qui est en moins en partie en matière plastique et au moins un système de conduites en tuyaux métalliques ou de raccords, et la fermeture du fût à usage unique complètement en matière plastique, comprend un dispositif d'arrêt du clapet multiple.
